(19) Europäisches Patentamt
European Patent Office
Office européen des brevets

(11) **EP 2 307 162 B1**

(12) **EUROPÄISCHE PATENTSCHRIFT**

(45) Veröffentlichungstag und Bekanntmachung des Hinweises auf die Patenterteilung:
**30.08.2017 Patentblatt 2017/35**

(21) Anmeldenummer: **09776027.6**

(22) Anmeldetag: **27.07.2009**

(51) Int Cl.:
**B23B 27/06** (2006.01) **B23B 27/14** (2006.01)
**B23B 29/034** (2006.01) **B23B 41/12** (2006.01)
**C23C 4/02** (2006.01) **F16J 10/04** (2006.01)
**B24B 33/08** (2006.01)

(86) Internationale Anmeldenummer:
**PCT/DE2009/001056**

(87) Internationale Veröffentlichungsnummer:
**WO 2010/015229 (11.02.2010 Gazette 2010/06)**

(54) **VERFAHREN UND WERKZEUG ZUR ERZEUGUNG EINER OBERFLÄCHE VORBESTIMMTER RAUHEIT**

METHOD AND TOOL FOR PRODUCING A SURFACE HAVING A PREDETERMINED ROUGHNESS

PROCÉDÉ ET OUTIL POUR PRODUIRE UNE SURFACE PRÉSENTANT UNE RUGOSITÉ PRÉDÉFINIE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **05.08.2008 DE 102008036454**
**12.09.2008 DE 102008046944**
**21.11.2008 DE 102008058452**

(43) Veröffentlichungstag der Anmeldung:
**13.04.2011 Patentblatt 2011/15**

(73) Patentinhaber:
• **Martinrea Honsel Germany GmbH**
**59872 Meschede (DE)**
• **Gühring KG**
**72458 Albstadt (DE)**

(72) Erfinder:
• **AST, Holger**
**72459 Albstadt (DE)**
• **BOZKURT, Lutfi**
**72474 Winterlingen (DE)**

• **SOMMERFELDT, Peter**
**99826 Hallungen (DE)**
• **GAND, Bernhard**
**52249 Eschweiler (DE)**
• **REIMANN, Horst**
**59872 Meschede (DE)**
• **ORLAMÜNDER, Frank**
**59609 Anröchte (DE)**

(74) Vertreter: **Winter, Brandl, Fürniss, Hübner, Röss, Kaiser, Polte - Partnerschaft mbB Patent- und Rechtsanwaltskanzlei Alois-Steinecker-Strasse 22 85354 Freising (DE)**

(56) Entgegenhaltungen:
EP-A1- 0 989 197    WO-A1-98/48964
WO-A1-2006/061695    WO-A1-2006/118505
WO-A1-2007/087989    WO-A1-2008/034419
CH-A- 262 604    DE-A1- 4 214 355
DE-A1- 19 802 842    US-A- 4 792 265
US-A1- 2005 064 146

**Beschreibung**

Die Erfindung betrifft ein Verfahren zur Erzeugung einer zylindrischen Oberfläche mit vorbestimmter Rauheit, die eine für das Auftragen von Material durch thermisches Spritzen geeignete Oberflächenstruktur vorbestimmter Geometrie hat, gemäß dem Oberbegriff des Patentanspruchs 1.

Ferner betrifft die Erfindung ein Werkzeug zur Durchführung eines solchen Verfahrens, sowie eine Vorrichtung zur Durchführung des Herstellungsverfahrens.

Zur Lösung bestimmter technischer Probleme, insbesondere tribologischer Probleme, ist es häufig erwünscht, Oberflächen eines Trägermaterials mit einem Werkstoff zu beschichten, der ganz bestimmte, an die jeweiligen Einsatzbedingungen optimal angepasste Eigenschaften hat. Derartige Beschichtungen haben im Vergleich zu Lösungen, bei denen mehrere Komponenten entweder mechanisch oder durch Klebe- oder Lötverbindungen zusammengefügt werden, den Vorteil einer äußerst kompakten Bauweise kombiniert mit einer verhältnismäßig großen Kontaktoberfläche der angrenzenden Werkstoffe, wodurch sich eine derartige Verbindungstechnik insbesondere für thermisch hoch beanspruchte Komponenten anbietet. Über die Beschichtung ergibt sich ein sehr guter Stoffschluss, so dass thermische Energie besonders gut abgeführt werden kann.

Im Bereich der metallischen Werkstoffe werden solche Beschichtungen häufig durch sogenanntes "thermisches Spritzen" aufgebracht, wobei hier neben dem sogenannten Flammspritzen in jüngerer Zeit häufig das sogenannte Plasmaspritzen oder das Lichtbogenspritzen zur Anwendung kommt. Dabei werden Pulver- und/oder Drahtpartikel mit hoher thermischer und kinetischer Energie auf die Oberfläche des zu beschichtenden Substrats geschleudert bzw. gespritzt und bilden dort nach der Temperaturabführung die gewünschte Auftragsschicht.

Neben einer genauen Einhaltung der Prozessparameter zur Vermeidung von sogenannten Aufbauporositäten, d.h. der Einlagerung von nicht mehr auffüllbaren Hohlräumen oder von sogenanntem "Overspray", bei dem ein Teil der nicht aufgeschmolzenen Teilchen nicht am Substrat haften bleibt sondern abprallt, kommt es für eine zuverlässige Nutzung dieses Herstellungsverfahrens entscheidend auf die mechanische Verklammerung zwischen Beschichtung und Substrat an, um ein ausreichend hohes Niveau der Schichthaftung zu erreichen. Es besteht in einem solchen Fall das Bedürfnis, die Substratoberfläche mit einer Oberflächenstruktur vorbestimmter Geometrie auszubilden, damit die Schicht sich über die gesamte zu beschichtende Oberfläche gleichmäßig mechanisch verzahnt. Dabei hat sich gezeigt, dass es vielfach nicht ausreicht, die Substratoberfläche beispielsweise durch Sandstrahlen oder Wasserstrahlen aufzurauen und/oder zu aktivieren.

Wenn beispielsweise ein Zylinderkurbelgehäuse mit geeigneten Beschichtungen versehen wird, die durch thermisches Spritzen aufgebracht werden, entsteht eine verschleißfeste und reibungsarme Lauffläche

Diese aufgebrachte Matrix, beispielsweise Stahlmatrix unterliegt im Einsatz einer nicht unerheblichen mechanischen Beanspruchung, so dass es für die Bereitstellung einer ausreichenden Standzeit darauf ankommt, die Beschichtung fest mit dem Substrat, beispielsweise in Form von Aluminiumguss zu verbinden. Es kommt insbesondere darauf an, die Oberfläche des zu beschichtenden Werkstoffs so zu bearbeiten, dass eine für das thermische Spritzen besonders gut geeignete Oberfläche mit genau definierten geometrischen Parametern entsteht, wobei dafür Sorge getragen werden muss, dass der Fertigungsprozess so gestaltet ist, dass die gewünschte Oberflächenstruktur mit geringster Streuung reproduzierbar hergestellt werden kann, um eine ausreichende Anbindung sicherzustellen.

In diesem Zusammenhang ist in Erwägung gezogen worden, die Substratoberfläche, zum Beispiel eines Aluminiumgussteils mittels eines Folgewerkzeugs spanabhebend zu bearbeiten, indem ein Rillenquerschnitt sukzessive mit nacheinander in Eingriff kommenden spanabhebenden Zähnen auf Endmaß bearbeitet wird. Mit bislang konzipierten Werkzeugen dieser Art wurde zwar angestrebt, in die vorbearbeitete zylindrische Oberfläche zum Beispiel eines Aluminiumgusses Strukturen einzubringen. In der Praxis zeigte sich allerdings das Problem, dass diese Strukturen nicht mit gleich bleibender Qualität und Formgenauigkeit in das Substrat eingebracht werden konnten. Die Haftung der anschließend durch thermisches Spritzen aufgebrachten Beschichtung variierte in zu weiten Bereichen. Es war also bislang nicht möglich, dieses Verfahren für eine Serienfertigung einzusetzen.

Ein gattungsgemäßes Verfahren zur Erzeugung einer Oberfläche mit vorbestimmter Oberflächenstruktur ist aus der WO 2008/034419 A1, die die Merkmale des Oberbegriffs des Anspruchs 1 in Kombination offenbart, sowie, in abgewandelter Ausgestaltung aus der US 2005/064146 A1 bekannt. Bei diesen Verfahren wird in die später zu beschichtende Oberfläche mit einem spanabhebenden Schneidwerkzeug zunächst ein erster Hinterschnitt hergestellt, und anschließend, eventuell unter Einsatz desselben Werkzeugträgers, ein zweiter Hinterschnitt hergestellt, wobei der zweite Hinterschnitt entgegengesetzt dem ersten Hinterschnitt orientiert ist.

Aus der DE 198 02 842 A1 ist ein Verfahren bekannt, mit dem sich in der Oberfläche Ölaufbewahrungseinrichtungen für Motoröl ausformen lassen. Zu diesem Zweck werden in der Oberfläche punktuell Kavitäten gebildet, wozu ein Walzverfahren unter Einsatz mehrerer kegelförmiger Walzen dient. Jede der Walzen besteht aus zwei glatten Abschnitten sowie einem dazwischen angeordneten Abschnitt mit spitzen, kegelförmigen Vorsprüngen. Der erste glatte Abschnitt führt zu einer Vorbereitung der Oberfläche, anschließend dringen die kegelförmig spitzen Vorsprünge punktuell in die Oberfläche ein und bilden durch Materialverdrängung einzelne Aussparungen. Da es um diese Aussparungen herum zu einem ringförmigen Auswurf von Material kommt, wird dieser Auswurf durch den zweiten glatten Abschnitt der Walze gepresst, wobei zugleich die Öffnungen der Aussparungen verengt werden, so dass sich einzelne Hohlräume zur Aufbewahrung des Motoröls ergeben. Die WO2006/118505 A1, die als nächstliegender Stand der Technik gegenüber dem Gegenstand des Anspruchs 10 angesehen wird, offenbart ein Werkzeug, das zur Erzeugung von Gewinden bestimmt ist, mit einem Trägerteil, auf dem zumindest eine im Wesentlichen quaderförmige Schneidplatte angebracht ist, die an einer Seitenkante fünf kammartig hintereinander liegende Zähne hat, von denen ein erster Zahn einen Vorbearbeitungszahn mit einem ersten Zahnquerschnitt und einem ersten Überstandsmaß, und zumindest ein zweiter, benachbarter Zahn einen Nut-Vorbearbeitungszahn mit einem zweiten Zahnquerschnitt, der höher als der erste Querschnitt ist, und einem zweiten Überstandsmaß, das größer als das erste Überstandsmaß ist, ausbildet.

Der Erfindung liegt deshalb die Aufgabe zugrunde, ein Verfahren zur Erzeugung einer beispielsweise zylindrischen Oberfläche mit vorbestimmter Oberflächenstruktur gemäß dem Oberbegriff des Anspruchs 1 in der Weise weiterzubilden, dass es zur Serienfertigung einer für das thermische Spritzen optimal vorbereiteten Substratoberfläche einsetzbar ist. Eine weitere Aufgabe besteht darin, ein Werkzeug zur Durchführung des Verfahrens bereitzustellen, mit dem die Substratoberfläche, die in optimaler Weise für das Auftragen eines Werkstoffs durch thermisches Spritzen vorbereitet ist, besonders wirtschaftlich, hochgenau und mit geringen Formschwankungen hergestellt werden kann.

Schließlich besteht eine Aufgabe der Erfindung darin, eine Vorrichtung zur Durchführung des Verfahrens unter Verwendung des erfindungsgemäßen Werkzeugs zur Verfügung zu stellen.

Diese Aufgaben werden hinsichtlich des Verfahrens durch die Verfahrensschritte des Anspruchs 1, und hinsichtlich des Werkzeugs durch die Merkmale des Anspruchs 10 gelöst. Erfindungsgemäß wird die Rillenstruktur in der Substratoberfläche in der Weise hergestellt, dass zunächst eine Basisrille mit einer Rillengrund-Breite, welche geringer ist als die Rillengrund-Breite der fertigen Rille, in die beispielsweise zylindrische Substratoberfläche eingearbeitet bzw. eingeschnitten oder eingeformt wird. Erst anschließend wird diese Basisrille weiter in der Weise spanabhebend oder spanlos bearbeitet, dass sich zumindest auf einer Seite bzw. einer Flanke der in das Substrat eingearbeiteten Rille eine Kontur ergibt, die für den späteren Verfahrensschritts des thermischen Spritzens optimal vorbereitet ist. Vorzugsweise wird die zumindest eine Flanke der Rille in der Weise bearbeitet, dass sich eine Hinterschneidung bzw. eine hinterschnittartige Verengung der in die Oberfläche eingebrachten Rillen ergibt. Aufgrund dieser Verengungen der Rillen gelingt es, zwischen Substrat und Beschichtung eine außergewöhnliche feste Verklammerung bereitzustellen. Durch diese schrittweise Einarbeitung der Rillenstruktur kann dafür gesorgt werden, dass an den nachfolgend in Eingriff kommenden Zähnen bzw. Schneiden gleichbleibende Kräfte auftreten.

Das Werkzeug wird als Folgewerkzeug ausgebildet. Weitere vorteilhafte Ausgestaltungen sind Gegenstand der Unteransprüche.

Besonders vorteilhaft ist es, wenn die spanlos oder spanabhebend eingearbeitete Rille in der Weise deformiert wird, dass die eingearbeiteten Rillenöffnungen durch Materialstauchungen verengt werden. Diese Materialstauchungen können gleichzeitig mit der Herstellung der Rillenkontur und mit dem gleichen Werkzeug erzeugt werden. Auf diese Weise ergibt sich eine besonders wirksame Hinterschneidung zur festen Verklammerung der aufzubringenden Spritzschicht mit der zylindrischen Oberfläche.

Es hat sich in Versuchen gezeigt, dass diese Art der Rillenflankenbearbeitung zuverlässig dafür sorgt, dass es auf Seiten des Werkzeugs nicht zu sogenannten "Aufschmierungen" kommt, die insbesondere bei der Bearbeitung verhältnismäßig weicher Materialien, wie z. B. Aluminium, verantwortlich für Formungenauigkeiten der zu erzeugenden Rillenstruktur waren. Auf diese Weise konnte beispielsweise in eine zylindrische Innenoberfläche eine hinterschnittene Rille mit einer Rillengrund-Breite von bis zu 0,18 mm und einer Tiefe von etwa 0,14 mm mit einer Rillensteigung (Rillenwendelsteigung) von ca. 0,7 mm mit gleichbleibender Nutengeometrie hergestellt werden, wobei es sogar gelungen ist, die dem aufzutragenden Werkstoff zugewandte Öffnung der Rille auf eine Breite von 0,12 mm zu beschränken. Damit werden besonders günstige Voraussetzungen für das Auftragen eines Werkstoffs durch thermisches Spritzen, beispielsweise für das Plasmaspritzen und für das Lichtbogenspritzen geschaffen. Gemäß der Erfindung wird mittels eines Folgewerkzeugs mit einfachster Kinematik und damit schnell und wirtschaftlich die gewünschte Oberflächenstruktur erzeugt. Die erfindungsgemäße stufenweise Bearbeitung zur Ausbildung des endgültigen Rillenprofils erlaubt es, die Oberflächen der Rillenstruktur, d. h. die Rillenflanken und/oder den Grund der Rille(n) in weiten Grenzen zu optimieren, um die Verzahnung zwischen dem Substrat und dem aufzutragenden Material zu optimieren. Dies gelingt dadurch, dass die bearbeitete Oberfläche mit einer Mikrostruktur versehen wird.

Das erfindungsgemäße Werkzeug zur Durchführung des Verfahrens zeichnet sich dadurch aus, dass den die Rillenstruktur einarbeitenden Zähnen der beispielsweise quaderförmigen Form- und Schneidplatte ein Vorbearbeitungs- und Sicherheitszahn vorgeschaltet wird, der ein geringeres Überstandsmaß als die nachfolgenden Nut-Aufbereitungs- bzw. Formzähne hat. Der Vorbearbeitungs- und Sicherheitszahn kann deshalb dazu genutzt werden, die Form- und Schneidplatte beim Eintauchen in die zylindrische Substrat-Oberfläche zu führen und zu stabilisieren. Die Zähne des Folgewerkzeugs kommen auf diese Weise mit größerer Präzision in Eingriff mit dem zu bearbeitenden Substrat. Durch diese schrittweise Einarbeitung der Rillenstruktur kann außerdem dafür gesorgt werden, dass an den nachfolgend in Eingriff kommenden Zähnen bzw. Schneiden gleichbleibende Kräfte auftreten. Dadurch wird nicht nur die Genauigkeit der herzustellenden Rillenstruktur verbessert, sondern es wird auch die Beanspruchung der äußerst kleinen Zähne des Werkzeugs besser kontrollierbar. Ein derart aufgebautes Werkzeug neigt damit insbesondere in Verbindung mit Minimalmengenschmierung (MMS) nicht mehr zu den vorstehend beschriebenen "Aufschmierungen" im Bereich der feinen Zahnung, so dass es erstmals gelingt, die gewünschte Mikro-Rillenstruktur mit eng tolerierter Geometrie in Serie herzustellen. Vorteilhafte Weiterbildungen des Verfahrens und des Werkzeugs sind Gegenstand der Unteransprüche.

Grundsätzlich ist das erfindungsgemäße Verfahren für beliebige Oberflächengestaltungen des zu beschichtenden Substrats anwendbar. Eine besonders leistungsstarke Ausführungsform des Verfahrens ergibt sich allerdings dann, wenn die zu beschichtende Oberfläche von einer zylindrischen Substrat-Oberfläche gebildet ist. Gemäß der Erfindung wird die Rillenstruktur dadurch hergestellt, dass zumindest eine wendelförmige Rille in die zylindrische Substrat-Oberfläche dadurch eingearbeitet wird, dass ein Werkzeug zum Einsatz kommt, das - ähnlich einem Gewindeschneidwerkzeug - kammartig und redundant hintereinander liegende Zähne unterschiedlichen Querschnitts trägt, welche sukzessive ein und dieselbe Rille bearbeiten. Dabei kann es von Vorteil sein, die Basisrille - gemäß Anspruch 4 - in die zylindrische Substrat-Oberfläche einzuformen bzw. einzuquetschen. Es ist jedoch gleichermaßen möglich, diese Basisrille spanabhebend herzustellen.

Die vorstehend beschriebene Rillenstruktur ist zur Vorbereitung des thermischen Spritzens so auszubilden, dass die Rillen eine sehr kleine Tiefe und Breite haben. Dementsprechend filigran ist auch das Werkzeug zur Herstellung der Rillenstruktur auszubilden. Aufgrund der wendelförmigen Rillenstruktur genügt zur Herstellung der Rillenstruktur ein einziges Form- bzw. Schneidteil, das mit kammartig angeordneten Zähnen ausgestattet wird, um die Rillenstruktur zu erzeugen. Es ist jedoch gleichermaßen möglich, in der Oberfläche eine mehrgängige Basisrille mit hinterschnittenem Rillenquerschnitt einzuarbeiten. Weil die arbeitenden bzw. schneidenden Arbeitsvorgänge redundant ausgeführt werden, ergibt sich der besondere Vorteil, dass auch bei Werkzeugverschleiß eine gleichbleibende Rillengeometrie herstellbar ist. Weil der Verfahrensschritt des Einarbeitens der Basisrille und/oder der fertigen Rillenstruktur (Schneid- und Deformationsoperationen) in Teilschritte unterteilt wird, können die auf die Zähne des Werkzeugs einwirkenden Kräfte noch besser kontrolliert werden. Weil die arbeitenden bzw. schneidenden Arbeitsvorgänge somit redundant ausgeführt werden, ergibt sich der besondere Vorteil, dass auch bei Werkzeugverschleiß eine gleichbleibende Rillengeometrie herstellbar ist.

Eine besonders vorteilhafte Substratoberfläche, die für das anschließende Auftragen eines Materials durch thermisches Spritzen optimale Struktur hat, ergibt sich mit der Weiterbildung des Verfahrens nach Anspruch 7. Durch das Einformen, d.h. durch Verdrängung von Substrat in der mit der Rillenstruktur zu versehenden Substrat-Oberfläche, entsteht nicht nur eine Zwischenrille, die die Kontaktoberfläche zwischen dem Substrat und dem durch thermisches Spritzen aufzutragenden Werkstoff vergrößert. Darüber hinaus bewirkt die Verdrängung des Substrat-Materials zwischen den Vertiefungen der Rille, dass die Rillenöffnung ausreichend verengt wird, damit die Spritzschicht besonders wirksam und intensiv mit dem Substrat-Material verklammern kann.

Das Werkzeug kann als reines Form-, Schneidoder Honwerkzeug ausgebildet sein oder aber auch als Werkzeug, das die verschiedenen Bearbeitungsformen - z.B. Schneiden und Formen oder Honen und Formen oder Schneiden und Honen - kombiniert. Es kann z.B. auch vorteilhaft sein, den Werkzeugaufbau eines Honwerkzeugs, wie z.B. einer Honahle, mit radial verstellbaren Werkzeugeinsätzen unter Zuhilfenahme eines Spreizkegels für die Positionierung der Schneiden zu nutzen. In der Ausgestaltung als Honwerkzeug werden vorzugsweise mehrere über den Umfang gleichmäßig verteilte Schneidenteile, wie z.B. Honleisten verwendet, die als Träger für ein Schleifmittel, das heißt das Schleifkorn, dienen, das vorzugsweise von Diamant (PKD) oder Bornitrid oder anderen, vergleichbar formstabilen Werkstoffen gebildet ist. Das aus der Bindung (keramischer, metallischer oder Kunstharz) vorstehende Schleifkorn hat in diesem Fall zusätzlich eine vorbestimmte Geometrie, die sich in vorbestimmter Weise über die axiale Länge der Honleiste verändert, so dass unter Abstimmung der axialen Vorschubbewegung auf die Relativ-Drehbewegung zwischen Honleiste und Substrat die oben beschriebene stufenweise Einarbeitung der definierten Rillenstruktur möglich ist.

Gemäß einer Variante kann auch vorgesehen sein, die Honleiste während der Axial-Relativbewegung bezüglich der Substrat-Oberfläche einer radialen Zustellbewegung zu unterziehen, so dass die von einem vorlaufenden Abschnitt der Honleiste(n) eingebrachten Rillen allmählich auf volle Tiefe geschliffen werden.

Mit einem Werkzeugaufbau nach dem Vorbild eines Honwerkzeugs werden die Rillen also steiler und sie können sich - bedingt durch die normalerweise vorgesehene Hin- und Herbewegung des Honwerkzeugs - auch kreuzen. Es ist sogar grundsätzlich möglich, die Honleisten so auszugestalten, dass den Schleifkörnern in vorbestimmter, auf die Kinematik beim Honvorgang abgestimmter Lagebeziehung Verdrängungserhebungen nachgeschaltet werden, so dass auch die im Zusammenhang mit dem Anspruch 3 erläuterte hinterschnittähnliche Nutverengung durch Materialverdrängung vorgenommen werden kann.

Es konnte in Versuchen gezeigt werden, dass der wichtigste Parameter für eine gute und dauerhafte Haftung einer im thermischen Spritzen aufgetragenen Schicht die mechanische Verklammerung zwischen Schicht und Substrat darstellt. Durch die Weiterbildung des Verfahrens nach Anspruch 7 bzw. durch die Weiterbildung des Werkzeugs nach Anspruch 14 lässt sich diese mechanische Verzahnung selbst dann sicherstellen, wenn die zumindest eine Flanke der in die Substrat-Oberfläche eingebrachten Rille nur schwach oder gar nicht hinterschnitten ist.

Die Weiterbildungen des Werkzeugs zur Durchführung des Verfahrens sorgen dafür, dass das Werkzeug und insbesondere die zum Einsatz kommende quaderförmige Form- und Schneidplatte besonders große Standwege erhalten. Wenn beispielsweise - gemäß Anspruch 13 - mehrere, vorzugsweise benachbarte formgebende Schneid- oder Quetschzähne vorgesehen sind, mit denen nacheinander unterschiedliche Flanken der auszubildenden, beispielsweise hinterschnittenen Rille bearbeitet werden können, ergeben sich geringere Schnittkräfte an den einzelnen Zähnen und damit größere Standzeiten des Werkzeugs.

Mit der Weiterbildung des Anspruchs 14 wird das Werkzeug zu einem Schneid- und Formwerkzeug. Durch geeignete Gestaltung des Verdrängungszahns, d. h. dadurch, dass der Verdrängungszahn über eine vorbestimmte Länge ein dem Sicherheitszahn entsprechendes Überstandsmaß erhält, wird das von der abgerundeten Erhöhung verdrängte Material zwangsläufig auf die geschnittene Rille hin verdrängt, wodurch die Rillenöffnung, die dem aufzutragenden Werkstoff zugewandt wird, zusätzlich verengt wird. Das Überstandsmaß des Verdrängungszahns und damit das Überstandsmaß des Sicherheitszahns ist vorzugsweise so bemessen, dass die Form- und Schneidplatte mit enger Spielpassung oder leichter Presspassung in die vorbereitete Bohrung, d.h. in die vorbereitete Substrat-Bohrung eingeführt werden kann. Vorzugsweise hat der Sicherheitszahn eine Breite, die einem Vielfachen der Breite des zumindest einen Nut-Vorbearbeitungszahns bzw. des zumindest einen Formzahns (beispielsweise Schwalbenschwanzzahns) entspricht. Auf diese Weise werden die Führung der Form- und Schneidplatte und damit die Arbeitsgenauigkeit des Werkzeugs weiter verbessert. Wie oben bereits erwähnt, kommt es bei der Herstellung der Rillenstruktur mit exakt vorbestimmter Geometrie darauf an, die Rille bzw. die Rillen mit höchster Genauigkeit so einzubringen, dass sich auch nach langem Standweg der Form- und Schneidplatte keine unkontrollierten Substrat-Ablagerungen zwischen den Zähnen, d.h. keine sogenannten "Aufschmierungen" ergeben, was insbesondere bei der Bearbeitung von verhältnismäßig weichen Materialien, wie z. B. Aluminium, zu größeren Schwankungen der ausgebildeten Rillengeometrie und zu Formabweichungen führen kann. Es hat sich gezeigt, dass es insbesondere mit einem Werkzeugaufbau nach den Ansprüchen 19 und 20 zuverlässig gelingt, die Rillenstruktur in Serie mit gleich bleibender Qualität unter Sicherstellung großer Standwege des Werkzeugs herzustellen.

Wenn das Schneideinsatzteil gemäß Anspruch 20 von einem Verbundteil gebildet ist, bei dem eine Hartstoff-Platte, beispielsweise aus polykristallinem Diamant (PKD) auf einem Trägerteil, vorzugsweise einem Hartmetall-Träger sitzt, können die Zähne äußerst filigran mit größtmöglicher Genauigkeit ausgebildet werden, so dass sich optimale Zerspanungsverhältnisse insbesondere dort einstellen, wo kleinste Spanvolumina bzw. Spanquerschnitte auftreten. Dennoch wird das Werkzeug höchst belastbar, da der die Hartstoff- bzw. PKD-Platte tragende Träger bzw. Hartmetall-Träger dem Werkzeug die erforderliche Stabilität, Steifigkeit und Elastizität gibt. Vorzugsweise werden die Zähne in die Verbundplatte hinein erodiert. Auf diese Weise gelingt es problemlos, die Formzähne über die Trennfuge zwischen Hartmetall-Träger und PKD-Platte hinweg stufenlos auszubilden.

Mit der Weiterbildung nach den Ansprüchen 21 und/oder 22 ergibt sich eine vorteilhafte Fein-Justierbarkeit der Formzähne, wodurch es gelingt, die Beanspruchungen der auf Hochpräzision gefertigten Zähne so gleichmäßig wie möglich zu halten.

Nachstehend werden anhand schematischer Zeichnungen mehrere Ausführungsbeispiele der Erfindung näher erläutert. Es zeigen:

Fig. 1 eine Seitenansicht einer ersten Ausführungsform des Werkzeugs zur Erzeugung einer zylindrischen Innenoberfläche, die eine für das Auftragen von Material durch thermisches Spritzen vorbereitete Oberflächenstruktur vorbestimmter Geometrie hat;

Fig. 2 die Stirnansicht des Werkzeugs gemäß Fig. 1 gemäß "II" in Fig. 1;

Fig. 3 in stark vergrößertem Maßstab den Schnitt gemäß "III-III" durch eine Wendeschneidplatte, die mit einem Schneideinsatzteil zur Erzeugung der Oberflächenstruktur ausgestattet ist;

Fig. 4 die Draufsicht der Wendeschneidplatte gemäß "IV" in Fig. 3;

Fig. 5 in stark vergrößertem Maßstab die Draufsicht des Schneideinsatzteils der Ausführungsform gemäß Fig. 4;

Fig. 6 den Schnitt gemäß "VI-VI" in Fig. 5;

Fig. 7 den Schnitt gemäß "VII-VII" in Fig. 5;

Fig. 8 den Schnitt gemäß "VIII-VIII" in Fig. 5;

Fig. 9 eine der Fig. 3 ähnliche Ansicht einer weiteren Ausführungsform der Wendeschneidplatte mit einem modifizierten Schneideinsatzteil; und

Fig. 10 in stark vergrößerter Darstellung eine Teil-Schnittansicht der mit dem beschriebenen Werkzeug herstellbaren Substrat-Oberflächenstruktur.

Im Folgenden wird ein Werkzeug beschrieben, mit dem eine zylindrische Innenoberfläche eines Substrats, insbesondere eine auf Maß vorbereitete bzw. vorbearbeitete Bohrung in einem Zylinderkurbelgehäuse derart bearbeitet werden kann, dass eine Schicht durch ein thermisches Spritzverfahren in der Serienproduktion aufgebracht werden kann. Durch diesen Materialauftrag durch sogenanntes thermisches Spritzen soll eine Buchse z. B. aus Stahl mit Spuren von anderen Elementen entstehen, und zwar in Form einer Matrix mit eingelagerten Oxidnestern und sehr feinen Poren. Das fertige Aufmaß dieser Schicht soll dann bei etwa 0,1 bis 0,2 mm liegen, wobei nach dem Honen dieser Schicht eine sehr glatte Oberfläche mit sehr feinen Poren entsteht.

Damit das durch thermisches Spritzen aufgebrachte Material gut auf dem Substrat, d.h. einem Aluminiumguss-Material haftet, ist es erforderlich, das Substrat mit einer besonderen Oberfläche auszustatten, damit sich die Verzahnung zwischen der durch thermisches Spritzen aufgetragenen Materialschicht und dem Aluminiumguss über die gesamte Substrat-Oberfläche reproduzierbar und mit gleichmäßig guter Qualität realisieren lässt. Die zylindrische Innenoberfläche des Aluminiumguss-Substrats hat beispielsweise dann, wenn es um die Herstellung von Zylinderlaufbuchsen von Brennkraftmaschinen geht, eine axiale Länge von etwa 130 mm, wobei extrem enge Zylinderformtoleranzen und Oberflächen-Rauheiten eingehalten werden müssen. Das erfindungsgemäße Werkzeug ist dabei so konzipiert, dass es in die bereits sehr präzise vorbearbeitete zylindrische Substrat-Oberfläche zumindest eine wendelförmige Rille mit vorbestimmter Geometrie einarbeitet, was nachfolgend näher beschrieben werden soll.

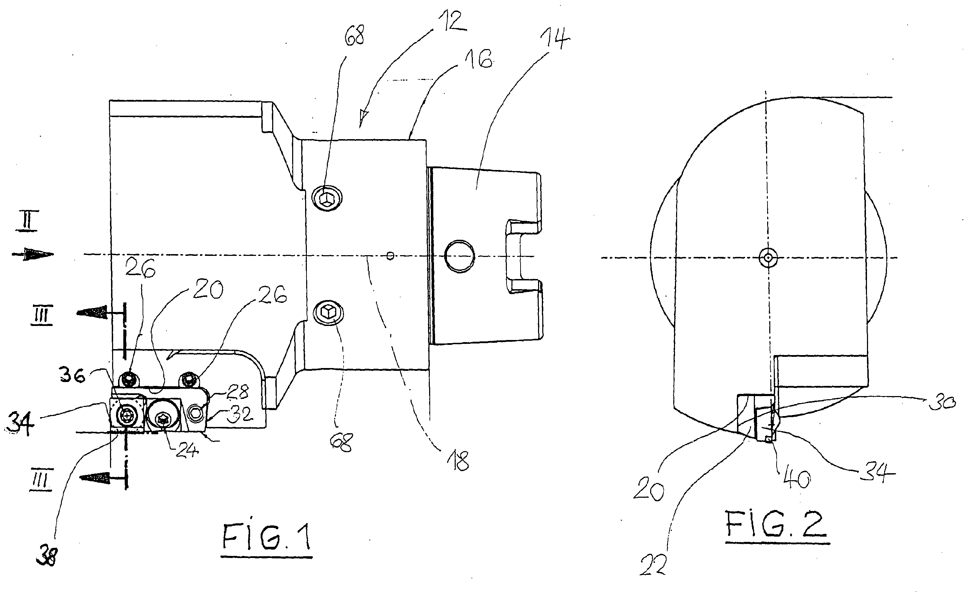

Das Gesamtwerkzeug ist in Fig. 1 mit dem Bezugszeichen 12 bezeichnet. Es hat einen Spannschaft 14 mit einem Hohlschaftkegel (HSK), an den sich ein Grundkörper 16 anschließt. Die Achse des Werkzeugs 12 ist mit 18 bezeichnet, und man erkennt aus der Darstellung, dass es sich bei dem Werkzeug 12 um ein extrem steifes und formstabiles Werkzeug handelt, was Voraussetzung dafür ist, dass die zylindrische Innenoberfläche des Aluminiumgusses mit der vorbestimmten Zylinderformgenauigkeit bearbeitet werden kann.

In einer mit 20 bezeichneten Tasche sitzt eine Werkzeugkassette 22, die im Wesentlichen die Form eines Quaders hat und mittels einer Spannschraube 24 gegen zwei im Winkel zueinander liegende Innenoberflächen der Tasche 20 gespannt werden kann. Mit dem Bezugszeichen 26 sind Exzenterstifte bezeichnet, die mittels geeigneter Werkzeuge, wie z. B. mittels eines Innensechskantschlüssels, verdreht werden können, um die Kassette 22 bezüglich der Achse 18 auszurichten. Es versteht sich von selbst, dass deshalb die Spannschraube 24 eine entsprechende Bohrung in der Kassette mit Spiel und im Winkel zu den beiden Anlageoberflächen der Tasche 20 durchdringt, damit derartige Fein-Justierungen der Werkzeugkassette 22 möglich sind.

Mit dem Bezugszeichen 28 ist ein Gewindestift bezeichnet, der sich - nicht näher dargestellt - auf einer Sitzfläche 30 der Tasche 20 abstützt, so dass die Kassette 22 unter Anlage an der radial innenliegenden Stützfläche der Tasche 20 in einer zur Achse 18 parallelen Ebene verschwenkbar ist.

Es kann auch vorgesehen sein, die Kassette 22 mittels eines nicht näher dargestellten Verstellbolzens, der mit einer Stirnfläche 32 der Kassette 22 in Anlagekontakt steht und im Wesentlichen radial in den Grundkörper 16 eingedrückt bzw. eingeschraubt werden kann, in axialer Richtung verstellbar, vorzugsweise fein justierbar, zu halten.

Die Werkzeugkassette 22 trägt ihrerseits eine Wendeschneidplatte 34, die mittels einer zentralen Befestigungsschraube 36, die mit einem Durchbruch 35 der Wendeschneidplatte zusammenwirkt, an der Werkzeugkassette 22 lösbar befestigt ist.

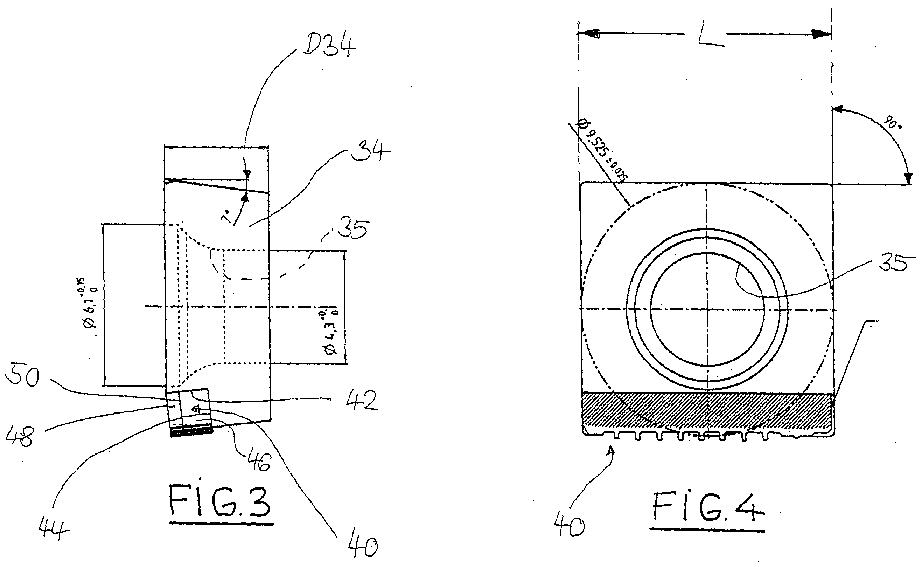

Die Wendeschneidplatte 34 besteht aus einem geeigneten Trägermaterial, wie z.B. Stahl, insbesondere Werkzeugstahl. Sie trägt jedoch an einer Seitenkante 38, die parallel zu der Werkzeugachse 18 und damit zu der zu bearbeitenden zylindrischen Substrat-Oberfläche ausrichtbar ist, ein Schneideinsatzteil 40, das sich im Wesentlichen über die gesamte Länge der Wendeschneidplatte 34 hinweg erstreckt. Zur Beschreibung der Einzelheiten wird im Folgenden auf die Fign. 3 und 4 Bezug genommen:

Man erkennt, dass die Wendeschneidplatte 34 im Bereich der Seitenkante 38 eine von zwei im rechten Winkel zueinander stehenden Flächen 42, 44 gebildete Ausnehmung hat, in die - vorzugsweise durch Hartlöten - das Schneideinsatzteil 40 in Form eines Quaders mit im Wesentlichen quadratischem Querschnitt fest eingesetzt ist. Die Fign. 3 und 4 zeigen die Wendeschneidplatte mit Schneideinsatzteil in stark vergrößertem Maßstab. Man erkennt aus der Darstellung jedoch, dass die Wendeschneidplatte 34 lediglich eine Dicke D 34 von etwa 4 mm hat und eine Kantenlänge von etwa 9,5 mm. Dementsprechend klein ist der Querschnitt des Schneideinsatzteils 40 mit einer Kantenlänge von etwa 1,1 mm.

Das Schneideinsatzteil 40 ist als Verbundteil ausgebildet, wobei eine Schneidplatte 48 aus polykristallinem Diamant (PKD) fest auf einem Hartmetallträger 46 sitzt. Die Verbindung zwischen den Teilen 46 und 48 erfolgt mittels Hartlöten. Die ebene Trennfuge zwischen Hartmetallträger 46 und Schneidplatte 48 bzw. PKD-Schneidplatte 48 ist mit dem Bezugszeichen 50 bezeichnet.

Man erkennt insbesondere aus der Darstellung gemäß Fig. 4, dass die PKD-Schneidplatte 48 um ein Maß K kürzer als die Kantenlänge des Hartmetallträgers 46 ist, wodurch es gelingt, die Beschädigungsgefahr an der verhältnismäßig spröden PKD-Schneidplatte 48 zu bannen. In Fig. 4 ist die PKD-Schneidplatte mit einer Schraffur angedeutet.

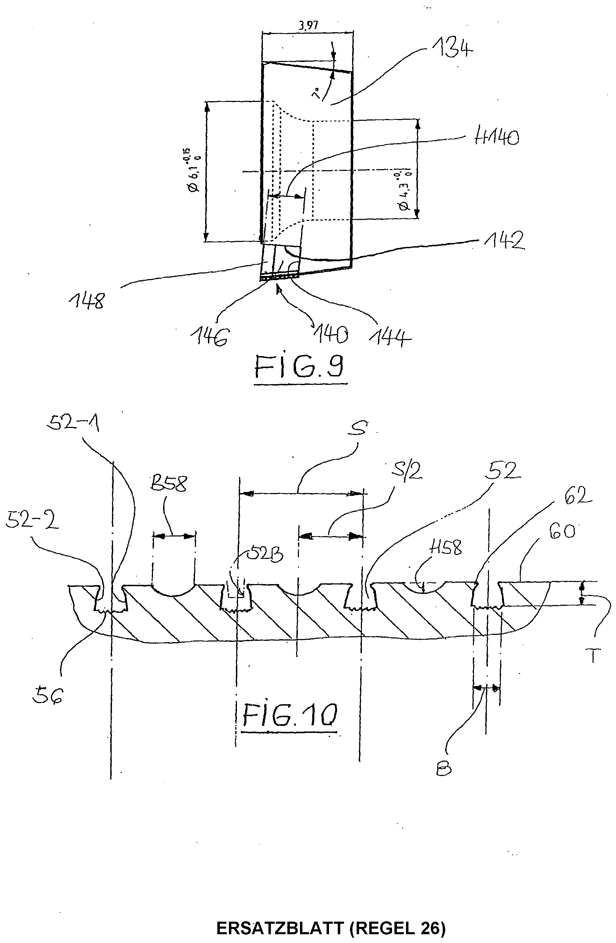

Man erkennt darüber hinaus, dass das Schneideinsatzteil 40 mit einer extrem filigranen Verzahnung ausgestattet ist, die es ermöglicht, z.B. in eine zylindrische Oberfläche eines Aluminiumgussteils mit einem beliebigen Durchmesser, beispielsweise dem Bohrungsdurchmesser eines Brennkraftmaschinzylinders, eine Rillenstruktur mit genau vorgegebener Geometrie einzuarbeiten. Dabei soll zumindest eine Rille entstehen, die sich gewindeähnlich über die gesamte axiale Länge der zylindrischen Substrat-Oberfläche erstreckt und beispielsweise eine Tiefe T (siehe Fig. 10) von unter 0,15 mm und eine Breite B in der Größenordnung von maximal 0,2 mm hat. Die Steigung S der Rille 52 (siehe Fig. 10) beträgt etwa 0,5 bis 0,8 mm.

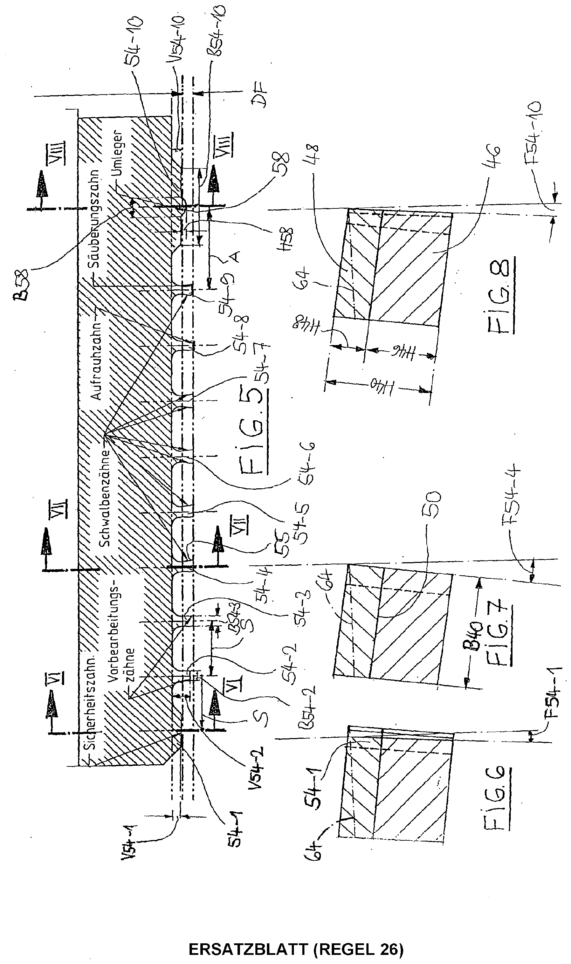

Zur Herstellung dieser Rille 52 mit einer Geometrie gemäß Fig. 10 ist das Schneideinsatzteil 40 mit einer speziellen Verzahnung ausgestattet, die nachfolgend unter Bezugnahme auf die Fign. 5 bis 8 näher beschrieben wird:

Die Fign. 5 bis 8 zeigen die Draufsicht und die Schnittdarstellungen des Schneideinsatzteils 40 in stark vergrößerter Darstellung. Die Gesamtlänge L des Schneideinsatzteils 40 liegt bei etwa 9 bis 10 mm. Die Breite B40 des Schneideinsatzteils 40 beträgt etwa 1 mm, ebenso wie die Gesamthöhe H40. Man erkennt aus der Darstellung nach den Fign. 6 bis 8, dass die PKD-Schneidplatte 48 lediglich eine Dicke H48 von etwa 0,3 bis 0,4 mm hat, während der Hartmetallträge 46 eine Dicke H46 zwischen 0,6 und 0,7 mm. Die mit dem Bezugszeichen 54-1 bis 54-10 bezeichneten Zähne sind vorzugsweise in die Seitenoberfläche des Schneideinsatzteils 40 über dessen gesamte Höhe hinein erodiert, und zwar mit folgender Geometrie:

Am axial vorlaufenden Endbereich befindet sich zunächst ein Sicherheitszahn 54-1, der um das Maß V54-1 von einem Zahngrund vorsteht. Das Maß V54-1 ist so gewählt, dass der Zahnkopf des Sicherheitszahns 54-1 bei fertig justierter Werkzeugkassette 22 im Wesentlichen auf dem Zylinderlaufflächendurchmesser, d.h. dem vorbearbeiteten Innendurchmesser des zu beschichtenden Substrats liegt. Die Breite des Sicherheitszahns mit dem Maß B54-1 liegt bei etwa 0,3 mm.

Benachbart zum Sicherheitszahn 54-1 folgen jeweils im Abstand der Wendelsteigung S zwei Vorbearbeitungszähne 54-2 und 54-3. Der Vorbearbeitungszahn 54-2 hat einen wesentlich schmaleren Zahnquerschnitt, der sich allerdings mit einem größeren Überstandsmaß V54-2 von der Kante des Schneideinsatzteils 40 weg erstreckt. Mit anderen Worten, der erste Vorbearbeitungszahn 54-2 taucht um ein vorbestimmtes Maß in die vorbearbeitete Substrat-Oberfläche ein und erzeugt eine Basisrille, die in Figur 10 mit strich-punktierter Linie 52B angedeutet ist.

Die Form des ersten Vorbearbeitungszahns 54-2 ist allerdings derart, dass die Breite B54-2 des Zahnkopfs kleiner ist als die Breite B der fertig gestellten Rille 52 (vgl. Fig. 10). Auch ist das Überstandsmaß V54-2 so gewählt, dass es noch nicht den Durchmesser DF der Fertigkontur der Rille 52 erreicht. Erst mit dem zweiten Vorbearbeitungszahn 54-3 wird die Basisrille auf volle Tiefe T (vgl. Fig. 10) geschnitten, wobei allerdings die Breite der Rille im Wesentlichen auf dem Maß B54-2 des ersten Vorbearbeitungszahns 54-2 gehalten wird.

Jeweils um die Steigung S der herzustellenden Rille 52 versetzt folgen sogenannte Formzähne, die im Folgenden als "Schwalbenschwanzzähne" 54-4 bis 54-7 bezeichnet werden. Es soll jedoch hervorgehoben werden, dass diese Formzähne nicht zwingend eine Flanke haben müssen, die beim Eintauchen in das Substrat eine hinterschnittene Rille erzeugen. Die Formzähne können ferner sowohl spanabhebend als auch spanlos arbeiten.

Im gezeigten Ausführungsbeispiel verbreitern die Schwalbenschwanzzähne 54-4 bis 54-7 die zuvor geformte Basisrille im Bereich des Rillengrunds sukzessive auf das Endmaß B (siehe Fig. 10). Dabei formen, d.h. zerspanen die Schwalbenschwanzzähne 54-4 und 54-5 die Rille auf einer Flanke zu einer hinterschnittenen Rillenform, während die folgenden Schwalbenschwanzzähne 54-6 und 54-7 die andere Flanke der Rille formen, indem sie eine zerspanende Bearbeitung ausführen. Mit dem Eingriff des letzten Schwalbenschwanzzahns 54-7 liegt eine hinterschnittene Rille 52 mit einer Kontur gemäß Fig. 10, d.h. mit einer Tiefe T und einer Breite im Nutgrund mit dem Maß B vor. Anstelle des Zerspanens kann auch eine spanlose Umformung durch die Formzähne stattfinden.

Wieder um die Rillensteigung S versetzt folgt dem letzten Formzahn bzw. Schwalbenschwanzzahn 54-7 ein sogenannter Aufrauzahn 54-8, der mit seinem Zahnkopf eine Riffelung, das heißt Aufrauung 56 mit einer definierten Rillentiefe im 1/100stel mm-Bereich erzeugt.

An den Aufrauzahn 54-8 oder an einen weiter unter zu beschreibenden Verdrängerzahn 54-10 schließt sich ein sogenannter Säuberungszahn an, mit dem eventuelle Spanreste in der geschnittenen Rille beseitigt werden können. Der Säuberungszahn ist mit dem Bezugszeichen 54-9 bezeichnet und er hat eine Zahnhöhe, die geringer ist als die Zahnhöhe der Formzähne 54-4 bis 54-6, so dass die Aufrauung 56 nicht mehr berührt wird.

Die Reihe der angeordneten Zähne 54-1 bis 54-9 wird abgeschlossen durch einen sogenannten Verdrängungszahn 54-10. Dieser Zahn hat eine Zahnkopfbreite B54-10, die einem Vielfachen der Breite der Vorbearbeitungs- bzw. Formzähne entspricht. Vorzugsweise im Zentrum des Verdrängungszahn 54-10 mit einem Überstandsmaß V54-10, das im Wesentlichen dem Überstandsmaß V54-1 des Sicherheitszahns 54-1 entspricht, bildet der Verdrängungszahn 54-10 eine abgerundete Erhöhung 58 aus, die beispielsweise eine Breite B58 von etwa 0,15 mm und eine Höhe H58 von etwa 0,05 mm hat. Da die Zahnhöhe V54-10 des Verdrängungszahns 54-10 so gewählt ist, dass sie die auf Maß vorbearbeitete Innenoberfläche des Substrats mehr oder weniger berührt, verdrängt der Verdrängungszahn 54-10 mit seiner Erhöhung 58 das verhältnismäßig weiche Material des Substrats, wie z.B. das Material des Aluminiumgusses, seitlich, so dass die hinterschnittene Nut 52 im Bereich des Übergangs zur Innenoberfläche 60 durch Materialanstauchungen 62 weiter verengt wird. Des Weiteren gewährleistet der Verdrängungszahn eine reproduzierbare und verschleißausgleichende Aufrautiefe.

Wie sich aus der vorstehenden Beschreibung ergibt, liegt die Erhöhung 58 in einem axialen Abstand A zum Säuberungszahn 54-9, der sich von der Rillensteigung S unterscheidet. Beispielsweise beträgt sie das 1,5-fache der Rillensteigung S.

Aus den Schnittdarstellungen der Fign. 6 bis 8 geht hervor, wie die Zähne 54-1 bis 54-10 mit dem Substrat in Eingriff gelangen. Man erkennt z. B. anhand der Fig. 6, dass der Freiwinkel F54-1 des Sicherheitszahns 54-1 einen Wert hat, der knapp über 0° liegt. Er kann auch sogar negativ sein. Der Freiwinkel F54-4 ist dann in jedem Fall positiv, wenn die Formzähne die Innenoberfläche des Substrats spanabhebend bearbeiten sollen. Entsprechend positiv ist dann auch der Spanwinkel der Vorbearbeitungszähne, des Aufrauzahns 54-8 und des Säuberungszahns 54-9. Dem gegenüber ist der Freiwinkel F54-10 des Verdrängungszahns 54-10, insbesondere im Bereich der Erhöhung 58 wesentlich kleiner. Er kann sogar negativ sein, so dass der Verdrängungszahn 54-10 mit der Erhöhung 58 nicht schneidet, sondern Material aus dem Substrat verdrängt bzw. umformt.

Man erkennt weiterhin aus den Darstellungen nach den Fign. 6 bis 8, dass der Keilwinkel des Schneideinsatzteils 40 im Wesentlichen 90° beträgt, sodass sich bei dem gezeigten Ausführungsbeispiel ein leicht negativer Spanwinkel ergibt.

Wie sich ferner aus den Darstellungen nach den Fign. 6 bis 8 ergibt, sind die Zähne 54-2 bis 54-9 derart in das Schneideinsatzteil 40, das heißt in den Hartmetallträger mit aufgelöteter PKD-Schneidplatte eingearbeitet, vorzugsweise einerodiert, dass sich über die gesamte Höhe H40 eine gleichbleibende Zahnhöhe ergibt. Dies trifft allerdings nicht für Zahngestaltungen im Bereich des Sicherheitszahns 54-1 und des Verdrängungszahns 54-10 zu, bei denen sich die Zahnhöhe mit zunehmendem Abstand vom Schneideneck leicht vergrößert.

Mit dem vorstehend beschriebenen Aufbau des Werkszeugs ergibt sich folgende Wirkungsweise bei der Erzeugung der zylindrischen Innenoberfläche mit vorbestimmter Oberflächenstruktur.

Das Werkzeug 12 wird mit seiner Achse 18 konzentrisch zur Achse der vorbearbeiteten Zylinderlauffläche ausgerichtet, sodass der radiale Abstand des Zahnkopfes des Sicherheitszahns 54-1 im Wesentlichen dem halben Zylinderlaufflächendurchmesser der Substrat-Oberfläche entspricht. Wenn die Kassette 22 zuvor mittels der Einstellmöglichkeiten (Exenterstifte 26, Gewindestift 28) derart ausgerichtet worden ist, dass die Zahnköpfe der Formzähne 54-4 bis 54-7 im Wesentlichen parallel zur Werkzeugachse 18 so ausgerichtet liegen, dass die Zahnlinie senkrecht auf der zu erzeugenden Wendelförmigen Rille steht, kann das Werkzeug in die Innenbohrung eingefahren werden. Anschließend wird eine Relativ-Drehbewegung zwischen dem Werkzeug 12 und der Substrat-Zylinderoberfläche erzeugt, und gleichzeitig eine axiale Relativ-Verschiebebewegung zwischen Werkzeug 12 und Substrat in der Weise, das gilt:

$$V_R = n_R \times S$$

wobei $V_R$ die axiale Relativgeschwindigkeit zwischen dem Werkzeug 12 und dem Substrat und $n_R$ die Relativ-Drehzahl zwischen Werkzeug und Substrat bedeuten.

Vorstehend wurde das Werkzeug beziehungsweise die Verzahnung des Werkzeugs im Bereich des Schneideinsatzteils 14 in der Ausgestaltung beschrieben, dass die Zähne über die gesamte Höhe H40 des Schneideinsatzteils 40 den gleichen Querschnitt aufweisen. Es sollte jedoch an dieser Stelle bereits hervorgehoben werden, dass dies nicht zwangsläufig der Fall sein muss. Es ist vielmehr auch möglich, die Zähne, insbesondere die Vorbearbeitungszähne 54-2 und 54-3 sowie die Formzähne 54-5 bis 54-8 zumindest im Bereich der vorlaufenden Flanke zu hinterschneiden, damit ein positiver Seitenspanwinkel bei der Zerspanung des Nutenprofils entsteht.

Sobald der Vorbereitungszahn 54-2 die Basiswelle mit einer Rillengrund-Breite mit dem Maß B54-2 geschnitten beziehungsweise geformt hat, tritt der weitere Vorbereitungszahn 54-3 in Funktion, der die Basisrille auf volle Tiefe T bearbeitet bzw. schneidet. Der Vorbearbeitungszahn 54-3 kann auch entfallen, woraufhin der erste Formzahn 54-4 in Funktion tritt. Dieser erste Formzahn 54-4 schneidet eine erste hinterschnittene Flanke 52-1 derart, dass sich ein etwas verbreiteter Nutgrund ergibt. Dieser Nutgrund wird mit dem zweiten Formzahn 54-5 nachgeschnitten, woraufhin der Nutgrund auf einer Seite auf volle Breite B/2 geschnitten ist. Anschließend schneiden die Formzähne 54-6 und 54-7 in Stufen die andere hinterschnittene Flanke 52-2 fertig, woraufhin ein Aufrauzahn 54-8 die Aufrauung 56 herstellt.

Bei dem zuvor beschriebenen Ausführungsbeispiel ist der Vorbearbeitungszahn 54-2 ebenso wie der Vorbearbeitungszahn 54-3 als Kombinationszahn ausgebildet, der sowohl schneidet als auch aufraut. Es ist jedoch gleichermaßen möglich, die Vorbearbeitungszähne 54-2 und 54-3 als Form- bzw. Umformzähne auszubilden, dass heißt als Zähne, die das weiche Material des Substrats lediglich verdrängen.

Die Ausführungsform nach den Fign. 1 bis 8 zeigt den Einsatz des Schneideinsatzteils 40 in einer Rechteckausnehmung (Fig. 3) mit den Flächen 42 und 44, die derart orientiert sind, dass sich bei einer quaderförmigen Gestaltung des Schneideinsatzteils 40 ein negativer Spanwinkel ergibt. Mit strichpunktierter Linie 64 ist deshalb in den Fign. 6-8 eine Fläche angedeutet, die dann entsteht, wenn die Oberseite des Schneideinsatzteils 40 schräg zum Hartmetallträger 46 abgetragen wird, wodurch ein positiver Spanwinkel ausgebildet werden kann.

In Fig. 9 ist eine Variante des Werkzeugs, genauer gesagt der Wendeschneidplatte mit eingelötetem Schneideinsatzteil dargestellt, bei dem ein Keilwinkel <90° mit positivem Spanwinkel und positivem Keilwinkel selbst dann erzielbar ist, wenn der Hartmetallträger ebenso wie die PKD-Schneidplatte planparallele Randflächen haben, was eine vereinfachte Herstellung sicherstellt. Zur Vereinfachung der Beschreibung sind diejenigen Komponenten, die den Elementen des zuvor beschriebenen Ausführungsbeispiels entsprechen, mit ähnlichen Bezugszeichen versehen, denen jedoch eine "1" vorangestellt ist.

Man erkennt, dass die Wendeschneidplatte 134 eine anders orientierte Ausnehmung für das Schneideinsatzteil 140 hat. Die Flächen 142 und 144 stehen zwar wieder erneut aufeinander senkrecht, allerdings ist die Bodenfläche 144 gegensinnig zur Bodenfläche 44 der Ausführungsform nach Fig. 3 geneigt. Wenn demnach aus einem quaderförmigen Schneideinsatzteil 140 mit Hartmetallträger 146 und darauf durch Hartnuten befestigter PKD-Schneidplatte und mit einer Kantenlänge H140 eine Verzahnung mit der Geometrie gemäß Fig. 5 herauserodiert wird, lässt sich mit einfachen herstellungstechnischen Maßnahmen im Bereich der Vorbearbeitungszähne und der Formzähne ein positiver Freiwinkel erzeugen, während im Bereich des Sicherheitszahns und des Verdrängungszahn durch entsprechende Steuerung des Erodierwerkzeugs ein verkleinerter Freiwinkel beziehungsweise ein negativer Freiwinkel realisierbar ist.

Es konnte in Großfeld-Versuchen gezeigt werden, dass ein nach den vorstehenden Kriterien aufgebautes Werkzeug in der Lage ist, eine Rillenstruktur mit der Geometrie gemäß Fig. 10 reproduzierbar in eine vorbearbeitete zylindrische Innenoberfläche von Aluminiumguss einzuarbeiten, wobei sich selbst nach langen Standwegen des Werkzeugs keine Aluminium-Aufschmierungen ergeben haben. Auf diese Weise konnte auf der Innenoberfläche des Aluminiumguss-Substrats eine Oberfläche geschaffen werden, die sich hervorragend für das Auftragen einer Spritzschicht eignete.

Als entscheidend hat sich dabei herausgestellt, dass das als Folgewerkzeug ausgebildete Schneideinsatzteil äußerst präzise bearbeitet werden kann und durch den Verbundaufbau eine an den entscheidenden Stellen verbesserte Stabilität erhält, sodass die Schneiden exakt und über eine lange Zeitspanne zuverlässig arbeiten können. Durch die Kombination von schneidenden und drückenden Zähnen kann darüber hinaus die Hinterschneidung der Rille 52 wesentlich verstärkt werden, so dass die mechanische Verzahnung bzw. Verklammerung zwischen dem aufgetragenen Werkstoff und dem Aluminium-Substrat wesentlich verbessert wird.

Selbstverständlich sind Abweichungen von den zuvor beschriebenen Beispielen möglich, ohne den Grundgedanken der Erfindung zu verlassen. So kann beispielsweise anstelle des Hartstoffs PKD auch ein anderer Hartstoff, wie z.B. kubisches Bornitrid (CBN) oder auch CVD-Diamant zum Einsatz kommen. Es wäre auch möglich, im Bereich der Schneiden mit anderen Hartstoffen wie z. B. Cermet-Werkstoffen zu arbeiten.

Das vorstehend beschriebene Werkzeug hat Zähne, die sich im Wesentlichen in Umfangrichtung erstrecken, dass heißt das Schneideinsatzteil 40 ist gerade gezahnt. Es ist gleichermaßen möglich, die Zähne leicht schräg zu stellen.

Abweichend von dem zuvor beschriebenen Ausführungsbeispiel ist es auch denkbar, das Werkzeug 12 mit mehreren Schneideinsatzteilen auszustatten, die über den Umfang verteilt sind, in diesem Fall könnten dann die Rillen nach der Art eines mehrgängigen Gewindes in das Substrat eingebracht, dass heißt eingeformt beziehungsweise eingeschnitten werden. Diese Modifikation des Werkzeugs führt letztlich zu einer Art Honwerkzeug, wobei die Honleisten, die sich über eine beträchtliche bzw. über die gesamte Länge der zu bearbeitenden Oberfläche erstrecken können, mit einer geeigneten Geometrie zur Erzeugung der Rillenstruktur ausgestattet werden.

Das Werkzeug kann auch als reines Form-, Schneid- oder Honwerkzeug ausgebildet sein oder aber auch als Werkzeug, das die verschiedenen Bearbeitungsformen - z.B. Schneiden und Formen und/oderoder Honen und Formen und/oder Schneiden und Honen - kombiniert. Es kann z.B. auch vorteilhaft sein, den Werkzeugaufbau eines Honwerkzeugs, wie z.B. einer Honahle, mit radial verstellbaren Werkzeugeinsätzen unter Zuhilfenahme eines Spreizkegels für die Positionierung der Schneiden zu nutzen. In der Ausgestaltung als Honwerkzeug werden vorzugsweise mehrere über den Umfang gleichmäßig verteilte Schneidenteile, wie z.B. Honleisten verwendet, die als Träger für ein Schleifmittel, das heißt das Schleifkorn, dienen, das vorzugsweise von Diamant (PKD) oder Bornitrid oder anderen, vergleichbar formstabilen Werkstoffen gebildet ist. Das aus der Bindung (keramischer, metallischer oder Kunstharz) vorstehende Schleifkorn wird in diesem Fall zusätzlich mit einer vorbestimmten Geometrie bzw. räumlichen Formgebung versehen, die sich in vorbestimmter Weise derart über die axiale Länge der Honleiste verändert, dass unter Abstimmung der axialen Vorschubbewegung auf die Relativ-Drehbewegung zwischen Honleiste und Substrat die oben beschriebene stufenweise bzw. allmähliche Einarbeitung der definierten Rillenstruktur möglich ist. Die Einhüllende des Schleifmittels ist in diesem Fall z.B. ein Konusmantel, so dass die in Vorschubrichtung vorlaufenden Schleifkörner weniger weit aus der Bindung vorstehen als die nachlaufenden Schleifkörner. Wenn die Honleisten eine axiale Hin- und Herbewegung ausführen, wird diese Einhüllende von einem Doppelkonus gebildet, der sich vom axialen Zenrum ausgehend in beiden axialen Richtungen verjüngt.

Gemäß einer Variante kann auch vorgesehen sein, die Honleiste während der Axial-Relativbewegung bezüglich der Substrat-Oberfläche einer radialen Zustellbewegung zu unterziehen, so dass die von einem vorlaufenden Abschnitt der Honleiste(n) eingebrachten Rillen allmählich auf volle Tiefe geschliffen werden. In diesem Fall kann die Einhüllende des Schleifmittels von einem Zylindermantel gebildet sein.

Mit einem Werkzeugaufbau nach dem Vorbild eines Honwerkzeugs werden die Rillen also steiler und sie können sich - bedingt durch die normalerweise vorgesehene Hin-und Herbewegung des Honwerkzeugs - auch kreuzen. Es ist sogar grundsätzlich möglich, die Honleisten so auszugestalten, dass den Schleifkörnern in vorbestimmter, auf die Kinematik beim Honvorgang abgestimmter Lagebeziehung Verdrängungserhebungen nachgeschaltet werden, so dass auch die im Zusammenhang mit dem Anspruch 3 erläuterte hinterschnittähnliche Nutverengung durch Materialverdrängung vorgenommen werden kann.

Wenn das Werkzeug gemäß Fig. 1 mit einer einzigen Wendeschneidplatte ausgestattet ist, kann es von Vorteil sein, den Grundkörper 16 über den Umfang verteilt mit Führungsleisten auszustatten, die dafür sorgen, dass das Werkzeug im Zusammenwirken mit dem Sicherheitszahn in der Substratbohrung sicher geführt wird.

Um die geforderte Formgenauigkeit des Zylinders nicht zu beeinträchtigen, lässt die Fig. 1 zwei mit dem Bezugszeichen 68 versehende Wuchtschrauben erkennen, mit denen eine Feinauswuchtung des Werkzeugs möglich ist.

In weiterer Abwandlung des vorstehend beschriebenen Werkzeugs ist es auch möglich die Rille insgesamt, d.h. auch im Bereich der hinterschnittenen Flanken einzuformen.

**Patentansprüche**

1. Verfahren zur Erzeugung einer zylindrischen Oberfläche, die eine für das Auftragen von Material durch thermisches Spritzen geeignete Oberflächenstruktur vorbestimmter Geometrie hat, bei dem in eine vorzugsweise auf Maß vorbearbeitete Substrat-Oberfläche (60) eine geometrisch bestimmte wendelförmig mit einer bestimmten Rillensteigung (S) verlaufende Mikro-Rillenstruktur (52) geringer Tiefe (T) und Breite (B) mittels eines Werkzeugs eingebracht wird, **dadurch gekennzeichnet, dass** das Werkzeug als Folgewerkzeug ausgebildet ist und die Rillenstruktur in die zylindrische Substrat-Oberfläche (60) eingearbeitet wird, indem ein Rillenquerschnitt sukzessive auf ein Endmaß bearbeitet wird, wobei zunächst eine einen Rillengrund und zwei Rillenflanken aufweisende Basisrille (52B) mit einer Rillengrund-Breite (B54-2), die geringer ist als die Rillengrund-Breite (B) der fertigen Rille, in die Substrat-Oberfläche (60) eingearbeitet wird, und dass anschließend die Rille, beispielsweise zumindest eine Flanke (52-1, 52-2) der Basisrille (52B), zur Erzeugung eines hinterschnittenen Rillenquerschnitts, spanlos- oder spanabhebend mit dem gleichen Werkzeug, welches mehrere um die Rillensteigung (S) zueinander versetzte Formzähne (54-2 bis 54-8) trägt, in einem Arbeitsgang in verschiedenen Schneid- und/oder Deformationsoperationen bearbeitet wird.

2. Verfahren nach Anspruch 1, **dadurch gekennzeichnet, dass** die durch Einarbeiten erzeugte Rillenstruktur in der Weise gleichzeitig deformiert wird, dass die Rillenöffnungen im gleichen Arbeitsgang und mit dem gleichen Werkzeug durch Materialstauchungen verengt werden, wobei immer reproduzierbare Aufrautiefen entstehen.
   < Es folgen die Ansprüche 3 bis 23>

3. Verfahren nach Anspruch 1 oder 2, **dadurch gekennzeichnet, dass** die durch Einarbeiten erzeugte Rillenstruktur in der Weise deformiert wird, dass die Rillenöffnungen durch Materialstauchungen verengt werden.

4. Verfahren nach einem der Ansprüche 1 bis 3, **dadurch gekennzeichnet, dass** die Basisrille (52B) in die Substrat-Oberfläche (60) eingeformt wird.

5. Verfahren nach einem der Ansprüche 1 bis 4, **dadurch gekennzeichnet, dass** der Schritt des Einarbeitens der Basisrille (52B) in Teilschritte unterteilt wird.

6. Verfahren nach einem der Ansprüche 1 bis 5, **dadurch gekennzeichnet, dass** beim Erzeugen des Rillenquerschnitts der Schneid- und Deformationsvorgang so erfolgt, dass beim Materialabtrag die Oberfläche aufgeraut wird und eine Mikrostrukturierung und/oder eine Mikrohinterschneidung und/oder eine Mikrorauigkeit entsteht.

7. Verfahren nach einem der Ansprüche 1 bis 6, **dadurch gekennzeichnet, dass** in die zylindrische Oberfläche (60) zwischen der zumindest einen zuvor erzeugten Rille (52) mit dem gleichen Werkzeug eine Zwischenrille (66) eingeformt wird, wodurch hinterschnittähnlich Materialdeformationen in der zuvor gefertigten Rillenstruktur erzeugt werden.

8. Verfahren nach einem der Ansprüche 1 bis 7, **dadurch gekennzeichnet, dass** dem Schritt der Erzeugung des beispielsweise hinterschnittenen Rillenquerschnitts ein Verfahrensschritt nachgeschaltet wird, in dem vorzugsweise im gleichen Arbeitsgang und vorzugsweise mit dem gleichen Werkzeug der Rillenquerschnitt gesäubert wird.

9. Verfahren nach einem der Ansprüche 1 bis 8, **dadurch gekennzeichnet, dass** die Bearbeitung trocken, insbesondere mit Minimalmengenschmierung (MMS, MQL) oder nass erfolgt, wobei die Bearbeitung sowohl mit öl-, feststoff-, als auch wasserhaltigen Kühl-/Schmierstoffen durchgeführt wird.

10. Werkzeug zur Durchführung des Verfahrens nach einem der Ansprüche 1 bis 9, mit einem Trägerteil (12), auf dem zumindest eine beispielsweise im Wesentlichen quaderförmige Form- und Schneidplatte (34) angebracht ist, die an einer parallel zu der zu bearbeitenden zylindrischen Substrat-Oberfläche ausrichtbaren Seitenkante (38) zumindest drei kammartig hintereinander liegende Zähne (54-1, 54-2, 54-4) hat, von denen ein erster Zahn einen Vorbearbeitungs- und Sicherheitszahn (54-1) mit einem ersten Zahnquerschnitt und einem ersten Überstandsmaß (V54-1), zumindest ein zweiter, benachbarter Zahn einen Nut-Vorbearbeitungszahn (54-2) mit einem zweiten Zahnquerschnitt, der höher als der erste Querschnitt ist, und einem zweiten Überstandsmaß (V54-2), das größer als das erste Überstandsmaß (V54-1) ist, und zumindest ein dritter, dem zweiten Zahn (54-2) benachbarter Zahn (54-4) einen Formzahn (54-4) mit zumindest einer seitlichen schrägen Flanke (55) ausbildet, über die sich der Zahnkopf zu einer Breite (B) vergrößert, die größer als die Zahnkopfbreite (B54-2, B54-3) des zuvor im Eingriff befindlichen Zahns (54-2) ist.

11. Werkzeug nach Anspruch 10, **gekennzeichnet durch** die Ausbildung als Form-, Schneid- oder Honwerkzeug.

12. Werkzeug nach Anspruch 10 oder 11, **dadurch gekennzeichnet, dass** zwischen dem Nut-Vorbearbeitungszahn (54-2) und dem zumindest einen, beispielsweise als Schwalbenschwanzzahn ausgebildeten Formzahn (54-4) ein weiterer Nut-Vorbearbeitungszahn (54-3) ausgebildet ist, der ein Überstandsmaß (V54-3) hat, welches im Wesentlichen ebenso groß ist wie das Überstandsmaß (V54-4) des Formzahns (54-4), wobei der seitliche Abstand (S) der Nut-Vorbearbeitungszähne (54-2, 54-3) und des zumindest einen Formzahns (54-4) gleich groß ist.

13. Werkzeug nach einem der Ansprüche 10 bis 12, **dadurch gekennzeichnet, dass** mehrere, vorzugsweise benachbarte Formzähne (54-4 bis 54-7) vorgesehen sind, mit denen verschiedene Flanken (52-1, 52-2) der auszubildenden, beispielsweise hinterschnittenen Rille (52) bearbeitbar sind.

14. Werkzeug nach einem der Ansprüche 10 bis 13, **dadurch gekennzeichnet, dass** benachbart zu dem zumindest einen beispielsweise als Schwalbenschwanzzahn ausgebildeten Formzahn () (54-4 bis 54-7) auf der dem Sicherheitszahn (54-1) abgewandten Seite zusätzlich ein Verdrängungszahn (54-10) ausgebildet ist, der über eine vorbestimmte Länge (B54-10) ein dem Sicherheitszahn (54-1) entsprechendes Überstandsmaß (V54-10) hat und vorzugsweise in seinem Mittelabschnitt eine vorzugsweise abgerundete Erhöhung (58) hat.

15. Werkzeug nach Anspruch 14, **dadurch gekennzeichnet, dass** der seitliche Abstand (A) der Erhöhung (58) von einem benachbarten Zahn (54-9) ungleich dem seitlichen Abstand (S) der übrigen Zähne untereinander ist.

16. Werkzeug nach einem der Ansprüche 10 bis 15, **dadurch gekennzeichnet, dass** der Sicherheitszahn (54-1) eine Breite (B54-1) hat, die einem Vielfachen der Breite (B54-2, B54-3) des zumindest einen Nut-Vorbearbeitungszahns (54-2, 54-3) bzw. des zumindest einen Formzahns (54-4) entspricht.

17. Werkzeug nach einem der Ansprüche 10 bis 16, **dadurch gekennzeichnet, dass** die schneidenden Zähne redundant ausgeführt werden, wodurch auch bei Werkzeugverschleiß eine gleichbleibende Rillengeometrie gewährleistet ist.

18. Werkzeug nach einem der Ansprüche 10 bis 17, **dadurch gekennzeichnet, dass** der Vorbearbeitungs- und Sicherheitszahn für gleichbleibende Kräfte an den nachfolgenden Zähnen und Schneiden sorgt.

19. Werkzeug nach einem der Ansprüche 10 bis 18, **dadurch gekennzeichnet, dass** die Formzähne (54-1 bis 54-10) aus verschleißfestem Werkstoff, vorzugsweise Stahl oder Hartstoff, bestehen.

20. Werkzeug nach Anspruch 19, **dadurch gekennzeichnet, dass** die Formzähne in einem Schneideinsatzteil (40) ausgebildet sind, das die Form eines prismen- bzw. quaderförmigen Blocks hat und von einem Verbundteil gebildet ist, bei dem eine Hartstoff-, beispielsweise PKD-Platte (48) auf einem beispielsweise aus Hartmetall bestehenden Träger (46) sitzt, vorzugsweise im Hartlötverfahren befestigt ist, wobei sich die Formzähne (54-1 bis 54-10) über die Trennfuge (50) der beiden Werkstoffe hinweg erstrecken.

21. Werkzeug nach Anspruch 20, **dadurch gekennzeichnet, dass** das Schneideinsatzteil (40) formschlüssig in einer beispielsweise als Wendeschneidplatte ausgebildeten Schneidplatte (34) fixiert, vorzugsweise verlötet ist.

22. Werkzeug nach Anspruch 21, **dadurch gekennzeichnet, dass** die Schneidplatte (34) von einer Kassette (22) getragen ist, die derart justierbar an einem Werkzeugmodul (12) sitzt, dass das Schneideinsatzteil (40) im Wesentlichen parallel zur Achse der zu bearbeitenden kreiszylindrischen Oberfläche (60) ausrichtbar ist.

23. Vorrichtung zur Durchführung des Verfahrens nach einem der Ansprüche 1 bis 9 mit einem Werkzeug nach einem der Ansprüche 10 bis 22, wobei zumindest das Werkzeug oder das Werkstück drehantreibbar ist, mit einem Werkzeugträger, der zumindest zwei Bewegungsfreiheitsgrade hat, von denen der eine die Vorschubrichtung des Werkzeugs (12) und/oder des Werkstücks parallel zur Drehachse (18) des Werkzeugs bzw. des Werkstücks und der andere die dazu im Winkel verlaufende Zustellrichtung festlegt, wobei der Vorschub auf die Relativ-Drehzahl ($n_R$) zwischen Werkzeug (12) und Werkstück abstimmbar ist.

## Claims

1. Method for producing an cylindrical surface that has a surface structure of predetermined geometry suitable for application of material by thermal spraying, in which in a substrate surface (60), preferably premachined to size, a geometrically determined groove structure (52) of small depth (T) and width (B) in a helical shape and having a predetermined groove pitch (S) is introduced by means of a tool, **characterized in that** said tool is embodied as a follow-on tool and **in that** said groove structure is worked into said cylindrical substrate surface (60) while a groove cross-section is processed successively to a finished size/measure in such a way that at first a base groove (52B) having a groove bottom and two groove flanks and having a groove bottom width (854-2) that is smaller than the groove bottom width (B) of the finished groove is introduced into the substrate surface (60), and that subsequently the groove, for example at least one flank (52-1, 52-2) of the base groove (52B), for producing an undercut groove cross-section is processed in a single working step in different cutting and/or deformation operations by the same tool carrying several forming teeth (54-2 to 54-8) which are staggered with respect to each other by the groove pitch (S).

2. Method according to claim 1, **characterized in that** the groove structure that has been produced by working-in is at the same time deformed in suchawaythat the groove openings in the same processing step and with the same tool are constricted by material compressive deformations, wherein always reproducible roughening depths are produced.

3. Method according to claim 1 or 2, **characterized in that** the worked-in groove structure is deformed In such a way that the groove openings are constricted by material compressive deformations.

4. Method according to one of the claims 1 to 3, **characterized in that** the base groove (52B) is formed into the substrate surface (60).

5. Method according to one of the claims 1 to 4, **characterized in that** the step of working-in the base groove (52B) is divided into partial steps.

6. Method according to one of the claims 1 to 5, **characterized in that** while generating the groove cross section the cutting and deformation process is performed such that during material removal the surface is roughened and a micro-structuring and/or microundercut and/or micro-roughness is produced.

7. Method according to one of the claims 1 to 6, **characterized in that** between the at least one groove (52) that has been generated previously with the same tool an intermediate groove (66) is formed into the cylindrical surface (60) whereby undercut-like material deformations are generated in the previously produced groove structure.

8. Method according to one of the claims 1 to 7, **characterized in that** the step of generating the e.g. undercut groove cross-section is followed by a method step in which preferably in the same working step and preferably with the same tool the groove cross-section is cleaned.

9. Method according to one of the claims 1 to 8, **characterized in that** said processing is done dry, in particular with minimal quantity lubrication (MQL), or wet, wherein said processing is performed with oil-containing as well as with solid material-containing as well as with water-containing cooling/lubricating materials.

10. Tool for carrying out the method according to one of the claims 1 to 9, comprising a support body (12) on which at least one e.g. substantially parallelepipedal shaping and cutting plate (34) is attached, said cutting plate (34) having atone lateral edge (38) that can be aligned parallel to the cylindrical substrate surface to be processed at least three comb-like sequentially arranged teeth (54-1, 54-4), of which

a first tooth forms a pre-machining and safety tooth (54-1) with a first tooth cross section and a first projecting measure (V54-1),

at least one second neighbouring tooth forms a groove pre-machining tooth (54-2) with a second tooth cross-section that is higher than the first cross-section and with a second projecting measure (V54-2) that is greater than the first projecting measure (V54-1), and

at least one third tooth (54-4) neighbouring the second tooth (54-2) forms a shaping tooth (54-4)with at least one lateral slanted flank (55) by which the tooth head is enlarged to a tooth width (8) that is greater than the tooth width of the tooth that is previously in working engagement.

11. Tool according to claim 10, **characterized by** the embodiment as a shaping, cutting, or honing tool.

12. Tool according to claim 10 or 11, **characterized In that** between the groove-pre-machining tooth (54-2) and the at least one shaping tooth (54-4) that is e.g. embodied as a dovetail tooth, a further groove-pre-machining tooth (54-3) is formed that has a projecting measure (V54-3) that is substantially of the same size as the projecting measure (V54-4) of the shaping tooth (54-4), wherein the lateral spacing (S) of the groove-pre-machining-teeth (54-2, 54-3) and the at least one shaping tooth (54-4) are of the same size.

13. Tool according to one of the claims 10 to 12, **characterized in that** several, preferably neighbouring shaping teeth (54-4 to 54-7 are provided with which different flanks (52-1, 52,2) of the e.g. undercut groove to be formed can be processed/worked.

14. Tool according to one of the claims 10 to 13, **characterized in that** adjacent to the at least one shaping tooth (54-4 to 54-7) embodied e.g. as a dovetail tooth on the side facing away from the safety tooth (54-1) additionally a displacement tooth (54-10) is formed that has across a predetermined length (B54-10) a projecting measure (V54-10) corresponding to that of the safety tooth (54-1) and preferably has at its center section a preferably rounded projection (58).

15. Tool according to claim 14, **characterized in that** the lateral spacing of the projection (58) from a neighbouring tooth (54-9) is different from the lateral spacing (S) of the other teeth relative to one another.

16. Tool according to one of the claims 10 to 15, **characterized in that** the safety tooth (54-1) has a width (B54-1) that is a multiple of the width (B54-2, B54-3) of the at least one groove-pre-machining (54-2, 54-3) tooth or of the at least one shaping tooth (54-4).

17. Tool according to one of the claims 10 to 16, **characterized in that** the teeth which are cutting are embodied redundantly so that even in case of tool wear a uniform groove geometry is ensured.

18. Tool according to one of the claims 10 to 17, **characterized in that** the pre-machining tooth as well as the safety tooth ensure consistently high forces acting on the subsequent teeth and cutting edges.

19. Tool according to one of the claims 10 to 18, **characterized in that** the shaping teeth (54-1 to 54-10) are comprised of wear-resistant material, preferably steel or hard material.

20. Tool according to claim 19, **characterized in that** the shaping teeth are formed in a cutting insert (40) that has the shape of a prism block or parallelepipedal block and is comprised of a composite part in which a plate (48) made of hard material, for example poly crystalline diamond (PCD), is seated on a support (46) comprised e.g. of hard metal, and is preferably attached by brazing, wherein the shaping teeth (54-1 to 54-10) extend across the border plane (50) of the two materials.

21. Tool according to claim 20, **characterized in that** the cutting insert (40) is secured by positive fit, preferably by being brazed, in a cutting plate (34) that is embodied e.g. as an indexable cutting insert.

22. Tool according to claim 21, **characterized in that** the cutting plate (34) is supported by a holder cassette (22) that is seated adjustably on a tool module (12) in such a way that the cutting insert (40) can be aligned substantially parallel to the axis of the circular-cylindrical surface (60) to processed.

23. Device for performing the method according to one of the claims 1 to 9 employing a tool according to one of the claims 10 to 22, in which at least the tool or the workpiece are rotationally driveable, comprising a tool carrier that has at least two degrees of freedom of movement, of which one is the advancing direction of the tool (12) and/or of the workpiece parallel to the axis of rotation (18) of the tool or the workpiece and the other determines the advancing direction extending at an angle thereto, wherein the advance can be adjusted to the relative rotary speed (nR) between tool (12) and workpiece.

## Revendications

1. Procédé de génération d'une surface cylindrique qui présente une structure de surface appropriée à l'application de matériau par pulvérisation thermique de géométrie prédéterminée, pour lequel dans une surface de substrat (60) préusinée de préférence sur mesure, une microstructure de rainure (52) déterminée géométriquement s'étendant en forme d'hélice avec un pas de rainure (S) déterminé, de profondeur (T) et largeur (B) moindres est introduite au moyen d'un outil, **caractérisé en ce que** l'outil est réalisé comme un outil progressif et la structure de rainure est intégrée dans la surface de substrat (60) cylindrique, **en ce qu'**une section transversale de rainures est usinée successivement à une mesure finale, dans lequel tout d'abord une rainure de base (52B) présentant un fond de rainure et deux flancs de rainure est intégrée avec une largeur de fond de rainure (B54-2) qui est moindre que la largeur de fond de rainure (B) de la rainure finie, dans la surface de substrat (60), et **en ce qu'**ensuite la rainure, par exemple au moins un flanc (52-1, 52-2) de la rainure de base (52B) est usinée pour la génération d'une section transversale de rainure contre-dépouillée, par enlèvement sans copeaux ou avec copeaux avec l'outil identique qui porte plusieurs dents de formation (54-2 à 54-8) décalées l'une de l'autre autour du pas de rainure (S), dans une passe de travail dans différentes opérations de coupe et/ou de déformation.

2. Procédé selon la revendication 1, **caractérisé en ce que** la structure de rainure générée par intégration est déformée simultanément de telle manière que les ouvertures de rainures soient resserrées dans la même passe de travail et avec le même outil par des déformations de matériau, dans lequel des profondeurs de grenaillage reproductibles apparaissent toujours.

3. Procédé selon la revendication 1 ou 2, **caractérisé en ce que** la structure de rainure générée par intégration est déformée de telle manière que les ouvertures de rainures soient resserrées par des déformations de matériau.

4. Procédé selon l'une des revendications 1 à 3, **caractérisé en ce que** la rainure de base (52B) est formée dans la surface de substrat (60).

5. Procédé selon l'une des revendications 1 à 4, **caractérisé en ce que** l'étape d'intégration de la rainure de base (52B) est divisée en étapes partielles.

6. Procédé selon l'une des revendications 1 à 5, **caractérisé en ce que** lors de la génération de la section transversale de rainures, le processus de coupe et de déformation est effectué de sorte que lors de l'enlèvement de matériau, la surface soit rendue rugueuse et qu'une microstructuration et/ou une microcontre-dépouille et/ou une microrugosité apparaisse.

7. Procédé selon l'une des revendications 1 à 6, **caractérisé en ce que** dans la surface (60) cylindrique entre l'au moins une rainure (52) générée précédemment avec le même outil, une rainure intermédiaire (66) est formée, par quoi des déformations de matériau sont générées de manière similaire à la contre-dépouille dans la structure de rainure fabriquée précédemment.

8. Procédé selon l'une des revendications 1 à 7, **caractérisé en ce qu'**une étape de procédé est réalisée après l'étape de la génération de la section transversale de rainures par exemple contre-dépouillée, dans laquelle de préférence dans la même passe de travail et de préférence avec le même outil, la section transversale de rainures est nettoyée.

9. Procédé selon l'une des revendications 1 à 8, **caractérisé en ce que** l'usinage est effectué par voie sèche, en particulier avec lubrification à quantité minimale (MMS, MQL) ou par voie humide, dans lequel l'usinage est réalisé avec des lubrifiants/réfrigérants non seulement contenant de l'huile, matière solide mais aussi contenant de l'eau.

10. Outil de réalisation du procédé selon l'une des revendications 1 à 9, avec une partie de support (12), sur laquelle au moins une plaque de formation et de coupe (34) par exemple sensiblement parallélépipédique est montée, laquelle présente sur une arête latérale (38) orientable parallèlement à la surface de substrat cylindrique à usiner au moins trois dents (54-1, 54-2, 54-4) se trouvant l'une derrière l'autre comme un peigne, dont une première dent réalise une dent de préusinage et de sécurité (54-1) avec une première section transversale de dent et une première mesure de dépassement (V54-1), au moins une seconde dent contiguë réalise une dent de préusinage de rainure (54-2) avec une seconde section transversale de dent qui est plus élevée que la première section transversale, et une seconde mesure de dépassement (V54-2) qui est plus grande que la première mesure de dépassement (V54-1), et au moins une troisième dent (54-4) contiguë à la seconde dent (54-2) réalise une dent de formation (54-4) avec au moins un flanc oblique latéral (55), par lequel la tête de dent augmente à une largeur (B) qui est plus grande que la largeur de tête de dent (B54-2, B54-3) de la dent (54-2) se trouvant précédemment en prise.

11. Outil selon la revendication 10, **caractérisé par** la réalisation comme outil de formation, coupe ou honage.

12. Outil selon la revendication 10 ou 11, **caractérisé en ce qu'**une autre dent de préusinage de rainure (54-3) est réalisée entre la dent de préusinage de rainure (54-2) et l'au moins une dent de formation (54-4) réalisée par exemple une dent en queue d'aronde, laquelle présente une mesure de dépassement (V54-3) qui est sensiblement aussi grande que la mesure de dépassement (V54-4) de la dent de formation (54-4), dans lequel la distance latérale (S) des dents de préusinage de rainure (54-2, 54-3) et d'au moins une dent de formation (54-4) est de même taille.

13. Outil selon l'une des revendications 10 à 12, **caractérisé en ce que** plusieurs dents de formation de préférence contiguës (54-4 à 54-7) sont prévues, avec lesquelles différents flancs (52-1, 52-2) de la rainure (52) à réaliser, par exemple contre-dépouillée, sont usinables.

14. Outil selon l'une des revendications 10 à 13, **caractérisé en ce qu'**une dent de déplacement (54-10) est réalisée en outre de manière contiguë à l'au moins une dent de formation () (54-4 à 54-7) réalisée par exemple comme une dent en queue d'aronde sur le côté éloigné de la dent de sécurité (54-1), laquelle présente sur une longueur prédéterminée (B54-10) une mesure de dépassement (V54-10) correspondant à la dent de sécurité (54-1) et présente de préférence dans sa section médiane une élévation (58) arrondie de préférence.

15. Outil selon la revendication 14, **caractérisé en ce que** la distance latérale (A) de l'élévation (58) d'une dent contiguë (54-9) est inégale à la distance latérale (S) des dents restantes entre elles.

16. Outil selon l'une des revendications 10 à 15, **caractérisé en ce que** la dent de sécurité (54-1) présente une largeur (B54-1) qui correspond à un multiple de largeur (B54-2, B54-3) d'au moins une dent de préusinage de rainure (54-2, 54-3) ou d'au moins une dent de formation (54-4).

17. Outil selon l'une des revendications 10 à 16, **caractérisé en ce que** les dents coupantes sont réalisées de manière redondante, par quoi une géométrie de rainure constante est aussi garantie en cas d'usure d'outil.

18. Outil selon l'une des revendications 10 à 17, **caractérisé en ce que** la dent de préusinage et de sécurité veille à des forces constantes sur les dents et tranchants suivants.

19. Outil selon l'une des revendications 10 à 18, **caractérisé en ce que** les dents de formation (54-1 à 54-10) se composent de matériau résistant à l'usure, de préférence d'acier ou matériau dur.

20. Outil selon la revendication 19, **caractérisé en ce**

**que** les dents de formation sont réalisées dans une partie d'insert de coupe (40) qui présente la forme d'un bloc en forme de prisme ou de parallélépipède et est formée par une partie composite, pour laquelle une plaque en matériau dur, par exemple en PKD (48) loge sur un support (46) se composant par exemple de métal dur, de préférence est fixée dans un procédé de brasage fort, dans lequel les dents de formation (54-1 à 54-10) s'étendent au-delà du joint de séparation (50) des deux matériaux.

21. Outil selon la revendication 20, **caractérisé en ce que** la partie d'insert de coupe (40) est fixée, de préférence brasée par complémentarité de formes dans une plaque de coupe (34) réalisée par exemple comme une plaque de coupe en hélice.

22. Outil selon la revendication 21, **caractérisé en ce que** la plaque de coupe (34) est portée par une cassette (22) qui loge de manière ajustable sur un module d'outil (12) de telle manière que la partie d'insert de coupe (40) soit orientable sensiblement parallèlement à l'axe de la surface (60) cylindrique et circulaire à usiner.

23. Dispositif de réalisation du procédé selon l'une des revendications 1 à 9 avec un outil selon l'une des revendications 10 à 22, dans lequel au moins l'outil ou la pièce est entraînable en rotation, avec un support d'outil qui présente au moins deux degrés de liberté de mouvement, dont l'un fixe le sens d'avance de l'outil (12) et/ou de la pièce parallèlement à l'axe de rotation (18) de l'outil ou de la pièce et l'autre fixe le sens d'approche s'étendant en angle par rapport à celui-ci, dans lequel l'avance peut être adaptée à la vitesse de rotation relative ($n_R$) entre l'outil (12) et la pièce.

EP 2 307 162 B1

FIG.1

FIG.2

FIG.4

FIG.3

EP 2 307 162 B1

Sicherheitszahn.
Vorbearbeitungs-zähne
Schwalbenzähne
Aufrauhzahn
Säuberungszahn
Umleger

B58

VI VII VIII

V54-1
54-10
V54-10
B54-10

54-1
V54-2 S
B54-2
54-2
B54-3 S
54-3
54-4
55
54-5
54-6
54-7
54-8
54-9 A
H58
58
DF

FIG.5

54-1
64

FIG.6

F54-1

64
50
B40

FIG.7

F54-4

H48
64
48
H40
H46
46

FIG.8

F54-10

FIG.9

FIG.10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008034419 A1
- US 2005064146 A1
- DE 19802842 A1
- WO 2006118505 A1